# EUROPÄISCHE PATENTSCHRIFT

(11) **EP 1 692 011 B1**
(45) Veröffentlichungstag und Bekanntmachung des Hinweises auf die Patenterteilung: **16.01.2008**
(21) Anmeldenummer: 04765523.8
(22) Anmeldetag: 23.09.2004
(51) Int. Cl.: B60R 13/08

(54) **AKUSTISCH WIRKSAME UNTERBODENVERKLEIDUNG FÜR KRAFTFAHRZEUGE**
ACOUSTICALLY ACTIVE UNDERBODY LINING FOR MOTOR VEHICLES
REVETEMENT DE DESSOUS DE CAISSE A EFFET ACOUSTIQUE POUR AUTOMOBILES

(30) Priorität: 23.10.2003 DE 10349743
(43) Veröffentlichungstag der Anmeldung: 23.08.2006
(73) Patentinhaber: Carcoustics TechConsult GmbH, 51381 Leverkusen (DE)
(72) Erfinder: ABECK, Volkmar, 50825 Köln (DE); BLÖMELING, Heinz, 42799 Leichlingen (DE)
(74) Vertreter: Meyer, Hans-Joachim
(86) Internationale Anmeldenummer: PCT/EP2004/010663
(87) Internationale Veröffentlichungsnummer: WO 2005/049380

(56) Entgegenhaltungen:
- EP-A- 1 251 062
- DE-A- 19 939 482
- US-A- 5 996 730
- US-B1- 6 302 466

## Beschreibung

Die Erfindung betrifft eine akustisch wirksame Unterbodenverkleidung für Kraftfahrzeuge, mit einem am Unterboden eines Kraftfahrzeuges befestigbaren Trägerteil und mindestens einem davon gehaltenen schallabsorbierenden Teil.

Aus der EP 1 251 062 A2 ist eine Unterbodenverkleidung eines Kraftfahrzeuges bekannt, die einen doppelwandigen Aufbau mit einer Unterwand und einer Oberwand aufweist, wobei die Unterwand eine strömungsangepasste Unterfläche bildet, die den Boden des Kraftfahrzeuges überdeckt. In der Unterbodenverkleidung ist ein Schall-Absorber integriert, und zwar dadurch, dass die Unterwand und/oder die Oberwand als Strukturteil ausgebildet ist, wobei das Strukturteil kästchenartige Hohlkammern aufweist, die als Resonatorelemente wirken. Die Hohlkammern stehen dabei miteinander in Verbindung und sind somit Teil eines gemeinsamen Luftvolumens. Die Unterbodenverkleidung wird als Extrusions-Blasformteil hergestellt.

Die DE 100 01 932 A1 offenbart ein Verkleidungselement, das als Unterbodenabdeckplatte für ein Kraftfahrzeug zur Abschirmung des Motors sowie von Teilen der Abgasanlage gegen Schallemissionen dient. Das Verkleidungselement, das gleichzeitig der Cw-Wert-Verbesserung eines Kraftfahrzeuges dient, ist aus thermoplastischem Kunststoff hergestellt und als selbsttragend steifer Hohlkörper ausgebildet, der wenigstens teilweise eine schallabsorbierende Füllung aus geschäumten thermoplastischem Kunststoff enthält.

In der DE 44 12 427 C2 ist ein Schallisolator beschrieben, der an der Unterseite eines Bodenteiles eines Fahrzeuges und innerhalb seitlicher Längsträger des Fahrzeugaufbaus angeordnet ist. Der Schallisolator weist eine perforierte Platte auf, die von der Unterseite des Fahrzeugbodenteils beabstandet ist, wobei ein Luftraum zwischen der perforierten Platte und der Unterseite des Fahrzeugbodenteils gebildet ist. In einigen der beschriebenen Ausführungsformen dieses Schallisolators ist der Luftraum teilweise oder vollständig mit porösem, schallabsorbierendem Material gefüllt.

Der vorliegenden Erfindung liegt die Aufgabe zugrunde, eine akustisch wirksame Unterbodenverkleidung für Kraftfahrzeuge zu schaffen, mit der auch Teile eines Auspuffstranges und/oder andere eine hohe Temperaturstrahlung emittierende Teile an der Unterseite eines Fahrzeugbodenteils derart verkleidet werden können, dass insbesondere eine verbesserte Schallisolierung erzielt wird.

Diese Aufgabe wird bei einer Unterbodenverkleidung der oben genannten Art erfindungsgemäß dadurch gelöst, dass das schallabsorbierende Teil oberseitig mit einer mikroperforierten, hitzeabschirmenden Schicht zumindest teilweise überdeckt ist, wobei die mikroperforierte, hitzeabschirmende Schicht zum Unterboden des Kraftfahrzeuges hin freiliegt und das schallabsorbierende Teil aus Mineralwolle, einem offenporigen Schaumstoff und/oder einem Faservliesstoff, insbesondere Nadelvlies gebildet ist.

Die oberseitige Überdeckung des schallabsorbierenden Teils mit einer mikroperforierten, hitzeabschirmenden Schicht ermöglicht es, das schallabsorbierende Teil der Unterbodenverkleidung auch unterhalb eines Auspuffstranges und/oder anderer eine hohe Wärmestrahlung emittierender Teile anzuordnen. Die erfindungsgemäße Unterbodenverkleidung ermöglicht somit insbesondere eine Kapselung des Auspuffstranges, was zu einer wesentlichen Verbesserung der Schallisolierung an dem betreffenden Kraftfahrzeug führt. Zugleich wird durch die damit verbundene Abschirmung von Auspuffteilen bzw. anderen heißen Teilen an der Unterseite des Fahrzeugbodens einer Brandgefahr entgegengewirkt, die bei einem herkömmlichen Kraftfahrzeug besteht, wenn dieses an einem Ort abgestellt wird, an dem trockenes Gras oder ein anderer leicht entzündlicher Stoff unter dem Fahrzeug vorhanden ist.

Eine bevorzugte Ausgestaltung der erfindungsgemäßen Unterbodenverkleidung ist dadurch gekennzeichnet, dass das schallabsorbierende Teil und die mikroperforierte, hitzeabschirmende Schicht mit Abstand zueinander angeordnet sind. Die hierdurch definierte Luftschicht ist sowohl hinsichtlich der thermischen als auch hinsichtlich der akustischen Isolationswirkung vorteilhaft.

Für eine hohe schallisolierende Wirkung der Unterbodenverkleidung ist es günstig, wenn das Trägerteil mit einem relativ großen und/oder mehreren getrennten schallabsorbierenden Teilen ausgerüstet ist. Die Kombination des schallabsorbierenden Teils bzw. entsprechender separater Teile mit einer oder mehreren mikroperforierten, hitzeabschirmenden Schichten kann dabei auf den Bereich der Unterbodenverkleidung begrenzt werden, der in der Nähe des Auspuffstrangs und/oder anderer, eine relativ hohe Temperatur aufweisender Teile liegt. Dementsprechend ist eine weitere bevorzugte Ausgestaltung der erfindungsgemäßen Unterbodenverkleidung dadurch gekennzeichnet, dass an dem Trägerteil mindestens ein weiteres schallabsorbierendes Teil gehalten ist, dessen Oberseite freiliegt.

Um eine besonders hohe schallisolierende Wirkung zu erzielen, kann das Trägerteil der erfindungsgemäßen Unterbodenverkleidung nach einer weiteren bevorzugten Ausgestaltung derart gestaltet sein, dass es im Montagezustand einen im wesentlichen geschlossenen Hohlraum mit dem Unterboden des Kraftfahrzeuges bildet.

Nach einer weiteren bevorzugten Ausgestaltung der Erfindung ist vorgesehen, dass das schallabsorbierende Teil luftdurchlässig ist. Diese Ausgestaltung ermöglicht einen Luftaustausch in dem von dem Fahrzeugunterboden und der Unterbodenverkleidung definierten Hohlraum, so dass eine Wärmeübertragung durch Konvektion in Bezug auf den im Hohlraum befindlichen Auspuffstrang oder andere dort befindliche heiße Teile sichergestellt werden kann.

Eine weitere vorteilhafte Ausgestaltung der erfindungsgemäßen Unterbodenverkleidung besteht darin, dass an dem Trägerteil mindestens eine öffnung ausgebildet ist, die der kühlenden Anströmung eines Auspuffstrangabschnittes oder eines anderen wärmeabgebenden Fahrzeugaggregates dient. Dabei kann an dem Trägerteil vorzugsweise auch mindestens ein Luftkanal ausgebildet sein, über den einem zu kühlenden Auspuffstrangabschnitt oder Fahrzeugaggregat gezielt Kühlluft zugeführt wird.

In einer weiteren Ausgestaltung ist die Unterseite des Trägerteils der erfindungsgemäßen Unterbodenverkleidung insgesamt oder größtenteils glattflächig ausgebildet, um den Strömungswiderstand (Cw-Wert) des betreffenden Kraftfahrzeuges und damit dessen Kraftstoffverbrauch zu senken. Günstig hinsichtlich der Herabsetzung des Strömungswiderstandes ist es auch, wenn das bzw. die schallabsorbierenden Teile der Unterbodenverkleidüng unterseitig mit einer perforierten Folie abgedeckt sind. Als perforierte Folie kann beispielsweise eine gelochte oder mikroperforierte, glatte Kunststofffolie aus Polypropylen zum Einsatz kommen. Die glatte, mikroperforierte Folie kann nicht nur den Strömungswiderstand des betreffenden Kraftfahrzeuges verringern, sie wirkt zudem als Feuchtigkeitssperre, so dass die schallabsorbierenden Teile der Unterbodenverkleidung nicht ihre akustische Wirksamkeit durch eindringendes Spritzwasser verlieren. Zusätzlich oder alternativ können die schallabsorbierenden Teile hydrophob und/oder oleophob ausgerüstet sein.

Weitere bevorzugte und vorteilhafte Ausgestaltungen der erfindungsgemäßen Unterbodenverkleidung sind in den Unteransprüchen angegeben.

Im folgenden wird die Erfindung anhand einer mehrere Ausführungsbeispiele darstellenden Zeichnung näher erläutert. Es zeigen in schematischer Darstellung:
- Fig. 1: eine Draufsicht auf eine Unterbodenverkleidung gemäß einem ersten Ausführungsbeispiel der Erfindung;
- Fig. 2: eine Draufsicht auf eine Unterbodenverkleidung gemäß einem zweiten Ausführungsbeispiel der Erfindung;
- Fig. 3: eine Schnittansicht der Unterbodenverkleidung gemäß Fig. 2 entlang der Schnittlinie A-A ;
- Fig. 4: eine Schnittansicht auf eine Unterbodenverkleidung gemäß einem dritten Ausführungsbeispiel der Erfindung ;
- Fig. 5: eine Schnittansicht auf eine Unterbodenverkleidung gemäß einem viertem Ausführungsbeispiel der Erfindung;
- Fig. 6: eine vergrößerte Detaildarstellung eines Schwingungsentkopplungselements in Schnittansicht; und
- Fig. 7: eine Schnittansicht auf eine Unterbodenverkleidung gemäß einem fünften Ausführungsbeispiel der Erfindung.

Die in der Zeichnung dargestellten Unterbodenverkleidungen 1, 1', 1", 1"', 1"" sind aus einem Trägerteil 2, 2', 2", 2"', 2"" und einem oder mehreren von dem Trägerteil gehaltenen schallabsorbierenden Teilen 3 aufgebaut. In dem Trägerteil 2, 2', 2", 2"', 2"" sind mehrere Bohrungen bzw. entsprechende Ausnehmungen 4 ausgebildet, die dem Durchstecken von mit dem Unterboden eines Kraftfahrzeuges verbindbaren Befestigungsmittel, insbesondere Befestigungsschrauben oder verrastbaren Steckverbindern (nicht gezeigt) dienen.

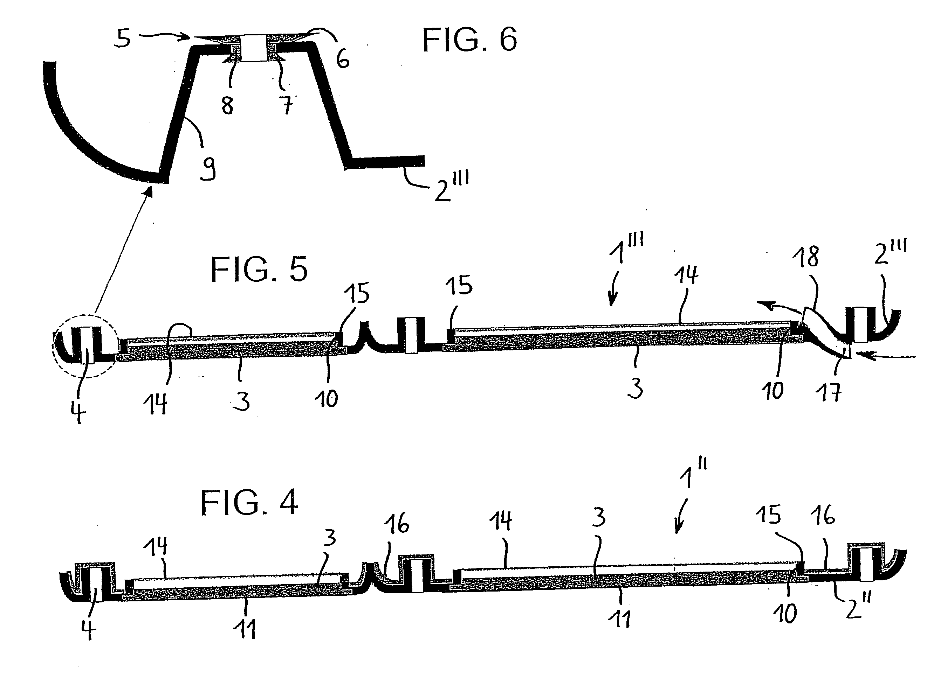

Die Ausnehmungen bzw. Bohrungen 4 sind mit schwingungsentkoppelnden Elementen versehen, über die das Trägerteil 2, 2', 2", 2"', 2"" am Unterboden des Kraftfahrzeugs befestigbar ist. Die schwingungsentkoppelnden Elemente können beispielsweise in Form von Gummihülsen ausgeführtsein, die formschlüssig mit dem Trägerteil verbunden sind. Die in Fig. 6 gezeigte Gummihülse 5 weist zwei flanschartige Abschnitte 6, 7 auf, die einstückig mit einem durchmesserreduzierten Mittelabschnitt 8 ausgebildet sind. Die Bohrung bzw. Ausnehmung 4 zur Aufnahme der Gummihülse 5 ist an einer becherförmigen Vertiefung 9 angeordnet, die den Kopf einer Befestigungsschraube (nicht gezeigt) aufnimmt und durch einen Deckel (nicht gezeigt) oder dergleichen zur Unterseite des Trägerteils 2' hin bündig verschließbar ist.

Das Trägerteil 2, 2', 2", 2"', 2"" ist aus Kunststoff, vorzugsweise aus glasfaserverstärktem Polypropylen hergestellt. Die mit dem Kunststoff vermischten Glasfasern haben eine durchschnittliche Länge von ca. 30 mm. Ihr Anteil im Trägerteil beträgt vorzugsweise etwa 30 Gew.-%. Die Unterseite des Trägerteils 2, 2', 2", 2"', 2"" ist insgesamt oder größtenteils glattflächig ausgebildet, so dass der Cw-Wert des mit der Unterbodenverkleidung ausgestattenden Fahrzeugs relativ gering ist. Das Trägerteil 2, 2', 2", 2"', 2"" kann beispielsweise im Spritzgießverfahren oder im Strangablege-Formpressverfahren hergestellt werden.

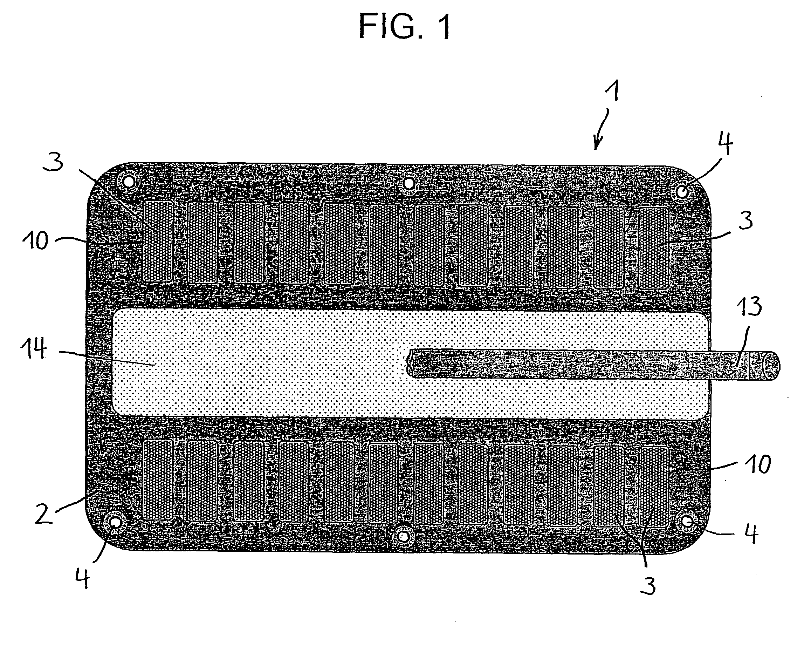

Die in den Figuren 1 bis 5 dargestellten Trägerteilen 2, 2, 2', 2", 2"' weisen jeweils mehrere Aussparungen bzw. Durchbrechungen 10 auf, in denen jeweils ein schallabsorbierendes Teil 3 eingefasst ist. Die schallabsorbierenden Teile 3 sind randseitig in den absatzförmigen Ausnehmungen bzw. Durchbrechungen 10 des Trägerteils gehalten oder eingespannt. Die schallabsorbierenden Teile 3 können bei der Herstellung des Trägerteils 2, 2', 2", 2''' in ein Formwerkzeug eingelegt werden und mit dem glasfaserverstärkten Kunststoff des Trägerteils 2, 2', 2'', 2''' randseitig umspritzt bzw. umpresst werden.

Die schallabsorbierenden Teile 3 sind jeweils aus einer luftdurchlässigen und/oder offenporigen Materiallage gebildet, die beispielsweise eine Dicke von 10 bis 30 mm aufweist. Sie sind vorzugsweise aus einem offenporigen Schaumstoff, insbesondere einem Etherschaumstoff oder Melaminharzschaumstoff, und/oder einem Faservliesstoff, insbesondere einem Polyesterfaservlies gebildet. Alternativ oder ergänzend können die schallabsorbierenden Teile auch aus Mineralwolle, insbesondere aus Mineralfaservlies bestehen. Die schallabsorbierenden Teile können insbesondere mehrlagig ausgeführt sein. Beispielsweise können sie aus einer oder mehreren Schaumstofflagen und/oder aus einer oder mehreren Vlieslagen, insbesondere Nadelvlieslagen aufgebaut sein. Um eine die akustische Wirksamkeit eventuell beeinträchtigende Feuchtigkeitsaufnahme zu verhindern, ist der Schaumstoff bzw. Faservliesstoff vorzugsweise hydrophob und/oder oleophob ausgerüstet.

Bei dem in Fig. 4 dargestellten Ausführungsbeispiel sind die Unterseiten der schallabsorbierenden Teile 3 jeweils mit einer mikroperforierten Kunststofffolie 11 abgedeckt, die außenseitig freiliegt. Die Kunststofffolie 11 wirkt trotz ihrer Perforation als Feuchtigkeitssperre, da es sich bei der Perforation um eine Mikroperforation mit relativ kleinen Lochdurchmessern handelt. Ferner trägt die auch akustisch wirksame Kunststofffolie 11 zur Verringerung des Cw-Wertes bei.

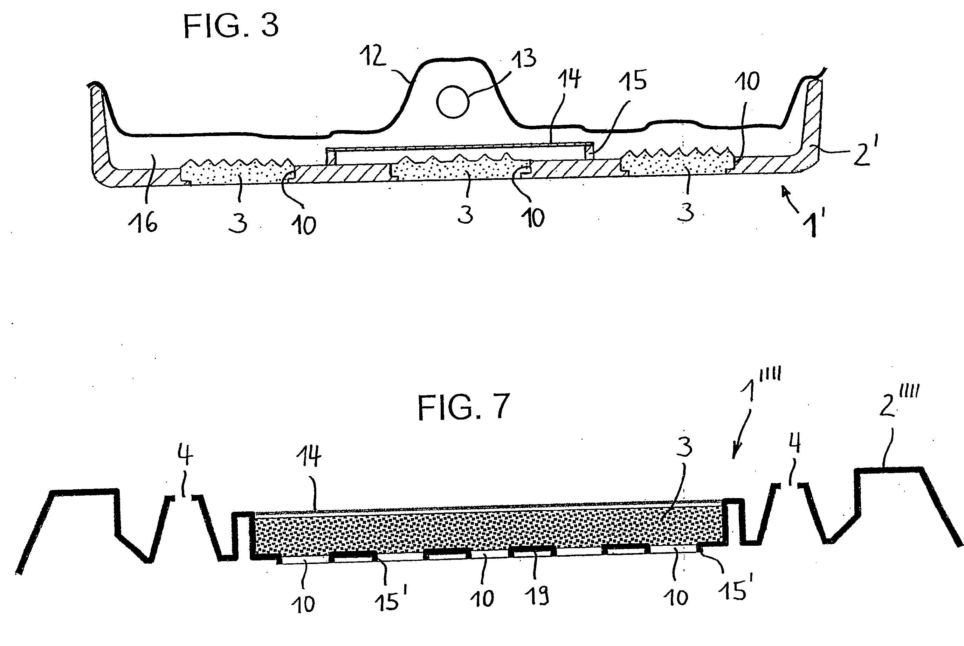

Die der Unterseite des Fahrzeugbodenblechs 12 zugewandte Seite der schallabsorbierenden Teile 3 kann eben aber vorzugsweise auch profiliert ausgebildet sein, um die akustisch wirksame Oberfläche und damit das Schallschluckvermögen zu erhöhen (vgl. Fig. 3).

Die Untergliederung des schallabsorbierenden Materials 3 durch mehrere Durchbrechungen 10 des Trägerteils 2, 2', 2" , 2"' ist hinsichtlich der Formfestigkeit des Trägerteils 2, 2', 2", 2"' günstiger als eine Ausführung mit beispielsweise nur einer einzelnen, relativ großen Durchbrechung 10.

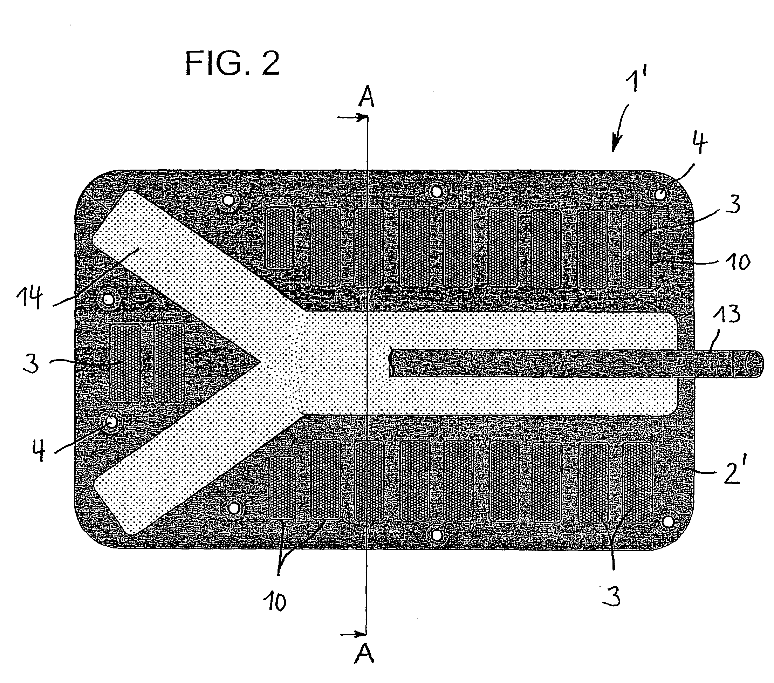

Die Durchbrechungen 10 sind in den hier dargestellten Ausführungsbeispielen regelmäßig angeordnet. Sie können insbesondere, wie in den Figuren 1 und 2 gezeigt, rasterartig verteilt angeordnet sein. Es ist aber auch möglich, die schallabsorbierenden Teile 3 und dementsprechend die zugehörigen Aussparungen bzw. Durchbrechungen 10 unregelmäßig an dem jeweiligen Trägerteil 2 anzuordnen und/oder ihre Flächengröße unterschiedlich groß zu gestalten.

In den Figuren 1 bis 3 ist jeweils ein Abschnitt eines Auspuffstranges 13 schematisch angedeutet. In dem Bereich der Unterbodenverkleidung 1, der heißen Fahrzeugteilen wie dem Auspuffstrang 13, insbesondere einem Abgaskatalysator zugewandt ist, sind die schallabsorbierenden Teile 3 oberseitig mit mindestens einer mikroperforierten, hitzeabschirmenden Schicht 14 überdeckt, die zum Unterboden 12 des Kraftfahrzeuges hin freiliegt. Die hitzeabschirmende Schicht 14 besteht vorzugsweise aus einer mikroperforierten Aluminiumfolie. Sie kann beispielsweise eine Dicke von 0,1 bis 0,3 mm aufweisen.

Die hitzeabschirmende Schicht 14 ist beabstandet zu dem jeweiligen schallabsorbierenden Teil 3 angeordnet, wobei an der Unterbodenverkleidung 1 eine umlaufende, nach oben vorstehende Rippe 15 ausgebildet ist, an der die Schicht 14 angeschweißt oder angeklebt ist. Es liegen aber auch Ausführungsformen im Rahmen der Erfindung, bei denen die mikroperforierte, hitzeabschirmende Schicht 14 randseitig am Trägerteil 2 eingespannt, umgossen oder umspritzt ist. Die hitzeabschirmende Schicht 14 ist dann im Trägerteil 2 einstückig integriert. Durch eine derartige Verbindung von Trägerteil 2 und hitzeabschirmender Schicht 14 kann mindestens ein Arbeitsschritt bei der Herstellung der Unterbodenverkleidung eingespart werden.

Der Abstand zwischen der mikroperforierten Hitzeschutzschicht 14 und dem schallabsorbierenden Teil 3 kann beispielsweise etwa 10 mm betragen. Die mikroperforierte Hitzeschutzschicht 14 und das zugeordnete schallabsorbierende Teil 3 definieren somit eine Luftkammer.

Mit der in Fig. 1 gezeigten Unterbodenverkleidung 1 kann ein im wesentlichen geradlinig ausgebildeter Auspuffstrangabschnitt 13 abgedeckt werden. Demgegenüber ist die Unterbodenverkleidung 1' gemäß Fig. 2 dazu bestimmt, einen eine Verzweigung aufweisenden Auspuffstrangabschnitt 13 abzudecken. Die hitzeabschirmende Schicht 14 ist dementsprechend Y-förmig ausgebildet, wobei unterhalb der Schicht 14 mehrere schallabsorbierende Teile im Träger 2' angeordnet sind.

Die Oberseiten der weiter entfernt von dem Auspuffstrang 13, näher an den Längsholmen des Kraftfahrzeugs angeordneten schallabsorbierenden Teile 3 sind nicht durch eine mikroperforierte, hitzeabschirmende Schicht 14 abgedeckt, sondern liegen frei.

Das Trägerteil 2, 2', 2" , 2"', 2"" ist so geformt, dass die mikroperforierte, hitzeabschirmende Schicht 14 und die schallabsorbierenden Teile 3, deren Oberseite freiliegt, im Montagezustand der Unterbodenverkleidung 1, 1', 1'', 1''', 1""' jeweils zum Unterboden 12 des Kraftfahrzeugs beabstandet sind. Das Trägerteil 2 bildet dabei einen im wesentlichen geschlossenen Hohlraum 16 mit dem Unterboden 12 des Kraftfahrzeuges.

Wie in den Figuren 4 und 5 gezeigt ist, können die umlaufenden Rippen 15, an denen die mikroperforierte Aluminiumfolie 14 angeklebt oder mittels Ultraschall angeschweißt ist, insbesondere auch am Rand der jeweiligen Durchbrechung 10 ausgebildet sein.

Bei dem Ausführungsbeispiel gemäß Fig. 4 ist die Innenseite des Trägerteils 2" insbesondere im Bereich der Befestigungsstellen mit einer schwingungsentkoppelnden Beschichtung 16 versehen. Die schwingungsentkoppelnde Beschichtung 16 kann mit Ausnahme der Bereiche der Durchbrechungen mit den schallabsorbierenden Teilen 3 ganzflächig auf der Innenseite des Trägerteils 2" angebracht sein.

Bei dem Ausführungsbeispiel gemäß Fig. 5 ist an dem Trägerteil 2''' mindestens eine Öffnung 17 mit einem kurzen Luftkanal 18 ausgebildet, die der kühlenden Anströmung eines Auspuffstrangabschnittes oder eines anderen wärmeabgebenden Fahrzeugaggregates dient. An der Öffnung 17 kann sich bei Bedarf ein längerer Luftkanal (nicht gezeigt) anschließen, der als separates Teil mit dem Trägerteil 2" verbunden ist oder einstückig dem Trägerteil ausgebildet ist.

Die in Fig. 7 gezeigte Unterbodenverkleidung 1"" weist ein Trägerteil 2"" mit einer Vertiefung auf, in der ein schallabsorbierendes Teil 3 eingelegt ist. Das schallabsorbierende Teil 3 ist an seiner Oberseite wiederum mit einer mikroperforierten Aluminiumfolie 14 abgedeckt, die randseitig mit dem Trägerteil 2"" verbunden ist. Die Aluminiumfolie 14 ist dabei mit Abstand zum schallabsorbierenden Teil 2 angeordnet, sodass zwischen ihnen eine Luftschicht liegt. Im Boden 19 der Vertiefung sind mehrere Aussparungen bzw. Durchbrechungen 10 ausgebildet. Am Rand der jeweiligen Durchbrechung 10 ist eine umlaufende, nach unten vorstehende Rippe 15' vorhanden. Die Rippen 15' sind akustisch wirksam. Es handelt sich hierbei um sogenannte Resonanzrippen. Zudem tragen diese Rippen zur Formfestigkeit des Trägerteils 2'''' bei.

## Patentansprüche

1. Akustisch wirksame Unterbodenverkleidung (1, 1', 1", 1"', 1"") für Kraftfahrzeuge, mit einem am Unterboden (12) des Kraftfahrzeuges befestigbaren Trägerteil (2, 2', 2", 2"', 2"") und mindestens einem davon gehaltenen schallabsorbierenden Teil (3), das aus Mineralwolle, einem offenporigen Schaumstoff und/oder einem Faservliesstoff gebildet ist
**dadurch gekennzeichnet, dass** das schallabsorbierende Teil (3) oberseitig mit einer mikroperforierten, hitzeabschirmenden Schicht (14) zumindest teilweise überdeckt ist, wobei die mikroperforierte, hitzeabschirmende Schicht (14) zum Unterboden (12) des Kraftfahrzeuges hin freiliegt.

2. Unterbodenverkleidung nach Anspruch 1,
**dadurch gekennzeichnet, dass** das schallabsorbierende Teil (3) und die mikroperforierte, hitzeabschirmende Schicht (14) mit Abstand zueinander angeordnet sind.

3. Unterbodenverkleidung nach Anspruch 1 oder 2,
**dadurch gekennzeichnet , dass** an dem Trägerteil (2, 2', 2", 2''', 2"") mindestens ein weiteres schallabsorbierendes Teil (3) gehalten ist, dessen Oberseite freiliegt.

4. Unterbodenverkleidung nach einem der Ansprüche 1 bis 3,
**dadurch gekennzeichnet, dass** das schallabsorbierende Teil (3) randseitig am Trägerteil (2, 2', 2" , 2"' , 2'''') formschlüssig gehalten und/oder eingespannt ist.

5. Unterbodenverkleidung nach einem der Ansprüche 1 bis 4,
**dadurch gekennzeichnet, dass** das schallabsorbierende Teil (3) luftdurchlässig ist.

6. Unterbodenverkleidung nach einem der Ansprüche 1 bis 5,
**dadurch gekennzeichnet, dass** das schallabsorbierende Teil (3) aus einer oder mehreren luftdurchlässigen und/oder offenporigen Materiallagen gebildet ist.

7. Unterbodenverkleidung nach einem der Ansprüche 1 bis 6,
**dadurch gekennzeichnet, dass** die Unterseite des Trägerteils (2, 2', 2", 2"', 2'''') insgesamt oder größtenteils glattflächig ausgebildet ist.

8. Unterbodenverkleidung nach einem der Ansprüche 1 bis 7,
**dadurch gekennzeichnet, dass** das schallabsorbierende Teil (3) unterseitig mit einer perforierten Folie überdeckt ist, die außenseitig freiliegt.

9. Unterbodenverkleidung nach einem der Ansprüche 1 bis 8,
**dadurch gekennzeichnet, dass** das schallabsorbierende Teil (3) an einer im Trägerteil ausgebildeten Durchbrechung eingefasst ist.

10. Unterbodenverkleidung nach Anspruch 9,
**dadurch gekennzeichnet, dass** am Rand der Durchbrechung (10) eine umlaufende, nach oben und/oder unten vorstehende Rippe (15, 15') ausgebildet ist.

11. Unterbodenverkleidung nach einem der Ansprüche 1 bis 10,
**dadurch gekennzeichnet, dass** in dem Trägerteil (2, 2', 2", 2"', 2"") mehrere Durchbrechungen (10) ausgebildet sind, in denen jeweils ein schallabsorbierendes Teil eingefasst ist.

12. Unterbodenverkleidung nach einem der Ansprüche 1 bis 11,
**dadurch gekennzeichnet, dass** das Trägerteil (2, 2', 2", 2"', 2"") schwingungsentkoppelnde Elemente (5) aufweist, über die das Trägerteil am Unterboden des Kraftfahrzeuges befestigbar ist.

13. Unterbodenverkleidung nach einem der Ansprüche 1 bis 12,
**dadurch gekennzeichnet, dass** das Trägerteil (2, 2', 2", 2"', 2"") derart gestaltet ist, dass es im Montagezustand einen im wesentlichen geschlossenen Hohlraum (16) mit dem Unterboden (12) des Kraftfahrzeuges bildet.

14. Unterbodenverkleidung nach einem der Ansprüche 1 bis 13,
**dadurch gekennzeichnet, dass** das Trägerteil (2, 2', 2" , 2"', 2'''') so geformt ist, dass im Montagezustand der Unterbodenverkleidung (1, 1' , 1", 1"', 1"") deren mikroperforierte, hitzeabschirmende Schicht (14) und/oder deren schallabsorbierendes Teil (3), dessen Oberseite freiliegt, jeweils zum Unterboden (12) des Kraftfahrzeuges beabstandet sind.

15. Unterbodenverkleidung nach einem der Ansprüche 1 bis 14,
**dadurch gekennzeichnet, dass** an dem Trägerteil (2"') mindestens eine Öffnung (17) ausgebildet ist, die der kühlenden Anströmung eines Auspuffstrangabschnittes (13) oder eines anderen wärmeabgebenden Fahrzeugaggregates dient.

16. Unterbodenverkleidung nach einem der Ansprüche 1 bis 15,
**dadurch gekennzeichnet, dass** an dem Trägerteil (2"') mindestens ein Luftkanal (18) ausgebildet ist.

17. Unterbodenverkleidung nach einem der Ansprüche 1 bis 16,
**dadurch gekennzeichnet, dass** das schallabsorbierende Teil (3) hydrophobe und/oder oleophobe Eigenschaften aufweist.

18. Unterbodenverkleidung nach einem der Ansprüche 1 bis 17,
**dadurch gekennzeichnet, dass** die mikroperforierte, hitzeabschirmende Schicht (14) randseitig am Trägerteil (2, 2', 2" , 2"', 2"") eingespannt, umgossen oder umspritzt ist.

## Claims

1. An acoustically effective underbody covering (1, 1', 1'', 1''', 1"") for motor vehicles, having a support part (2, 2', 2", 2"', 2"") attachable to the underbody (12) of the motor vehicle and at least one sound-absorbing part (3) supported thereby, wherein the sound-absorbing part (3) is made of mineral wool, an open-pored foam, and/or a fibrous nonwoven material,
**characterized in that** the sound-absorbing part (3) is at least partially covered on top with a microperforated, heat-shielding layer (14), the microperforated, heat-shielding layer (14) being exposed toward the underbody (12) of the motor vehicle.

2. The underbody covering according to Claim 1,
**characterized in that** the sound-absorbing part (3) and the microperforated, heat-shielding layer (14) are positioned at a distance to one another.

3. The underbody covering according to Claim 1 or 2,
**characterized in that** at least one further sound-absorbing part (3), whose top is exposed, is supported on the support part (2, 2', 2'', 2"', 2' ' ' ') .

4. The underbody covering according to one of Claims 1 through 3,
**characterized in that** the sound-absorbing part (3) is clamped and/or supported in a form-fitting way around its edge on the support part (2, 2', 2'', 2''', 2"").

5. The underbody covering according to one of Claims 1 through 4,
**characterized in that** the sound-absorbing part (3) is permeable to air.

6. The underbody covering according to one of Claims 1 through 5,
**characterized in that** the sound-absorbing part (3) is formed by one or more air-permeable and/or open-pored material layers.

7. The underbody covering according to one of Claims 1 through 6,
**characterized in that** the bottom of the support part (2, 2', 2", 2"', 2"") is implemented largely or as a whole with a smooth surface.

8. The underbody covering according to one of Claims 1 through 7,
**characterized in that** the sound-absorbing part (3) is covered on the bottom with a perforated film which is externally exposed.

9. The underbody covering according to one of Claims 1 through 8,
**characterized in that** the sound-absorbing part (3) is set in a passage implemented in the support part.

10. The underbody covering according to Claim 9,
**characterized in that** a peripheral rib (15, 15'), which projects upward and/or downward, is implemented on the edge of the passage (10).

11. The underbody covering according to one of Claims 1 through 10,
**characterized in that** multiple passages (10) are implemented in the support part (2, 2', 2", 2''', 2''''), in each of which a sound-absorbing part is set.

12. The underbody covering according to one of Claims 1 through 11,
**characterized in that** the support part (2, 2', 2", 2"', 2"") has oscillation-decoupling elements (5), via which the support part is attachable to the underbody of the motor vehicle.

13. The underbody covering according to one of Claims 1 through 12,
**characterized in that** the support part (2, 2', 2 " , 2''', 2"") is designed in such a way that it forms an essentially closed cavity (16) with the underbody (12) of the motor vehicle in the mounted state.

14. The underbody covering according to one of Claims 1 through 13,
**characterized in that** the support part (2, 2', 2", 2"', 2"") is shaped in such a way that, in the mounted state of the underbody covering (1, 1', 1", 1''', 1''''), its microperforated, heat-shielding layer (14) and/or its sound-absorbing part (3), whose top is exposed, are each at a distance to the underbody (12) of the motor vehicle.

15. The underbody covering according to one of Claims 1 through 14,
**characterized in that** at least one opening (17), which is used for cooling airflow against an exhaust train section (13) or another heat-releasing vehicle assembly, is implemented on the support part (2''').

16. The underbody covering according to one of Claims 1 through 15,
**characterized in that** at least one air channel (18) is implemented on the support part (2''').

17. The underbody covering according to one of Claims 1 through 16,
**characterized in that** the sound-absorbing part (3) has hydrophobic and/or oleophobic properties.

18. The underbody covering according to one of Claims 1 through 17,
**characterized in that** the microperforated, heat-shielding layer (14) is clamped, cast in, or extrusion coated around the edge on the support part (2, 2', 2'', 2''', 2'''').

## Revendications

1. Revêtement de dessous de caisse à effet acoustique (1, 1', 1", 1"', 1"") pour automobiles, avec une parti, de support (2, 2', 2'', 2''', 2"") fixable au dessous de caisse (12) de l'automobile et au moins une partie à absorption acoustique (3), maintenue dessus, qui est formée, de laine minérale, d'une mousse poreuse et/ou d'un voile de fibres, **caractérisé en ce que** la partie à absorption acoustique (3) est au moins partiellement revêtue sur la face supérieure, d'une couche microperforée, protégeant de la chaleur (14), où la couche microperforée, protégeant de la chaleur (14) est séparée du dessous de caisse (12) de l'automobile.

2. Revêtement de dessous de caisse selon la revendication 1, **caractérisé en ce que** la partie à absorption acoustique (3) et la couche microperforée, protégeant de la chaleur (14) sont agencées avec un écart entre elles.

3. Revêtement de dessous de caisse selon la revendication 1 ou 2, **caractérisé en ce que** sur la partie de support (2, 2', 2'', 2"', 2''''), au moins une autre partie à absorption acoustique (3) est maintenue, dont la face supérieure est libre.

4. Revêtement de dessous de caisse selon l'une des revendications 1 à 3, **caractérisé en ce que** la partie à absorption acoustique (3) est maintenue et/ou montée latérale sur la partie de support (2, 2', 2", 2"', 2""), de manière clabotée.

5. Revêtement de dessous de caisse selon l'une des revendications 1 à 4, **caractérisé en ce que** la partie à absorption acoustique (3) est perméable à l'air.

6. Revêtement de dessous de caisse selon l'une des revendications à 5, **caractérisé en ce que** la partie à absorption acoustique (3) est formée d'une ou de plusieurs couches de matériau perméable à l'air et/ou à pores ouverts.

7. Revêtement de dessous de caisse selon l'une des revendications 1 à 6, **caractérisé en ce que** la face inférieure de la partie de support (2, 2', 2", 2"', 2'''') présente totalement ou pour la plus grande partie, une surface lisse.

8. Revêtement de dessous de caisse selon l'une des revendications 1 à 7, **caractérisé en ce que** la partie à absorption acoustique (3) est couverte sur la face inférieure, d'une feuille perforée, qui est libre côté extérieur.

9. Revêtement de dessous de caisse selon l'une des revendications 1 à 8, **caractérisé en ce que** la partie à absorption acoustique (3) est enchâssée dans une découpe formée dans la partie de support.

10. Revêtement de dessous de caisse selon la revendication 9, **caractérisé en ce que** sur le bord de la découpe (10), est formée une nervure (15, 15') périphérique, s'étendant vers le haut et/ou le bas.

11. Revêtement de dessous de caisse selon l'une des revendications 1 à 10, **caractérisé en ce que** dans la partie de support (2, 2', 2", 2''', 2''''), plusieurs découpes (10) sont formées, dans lesquelles une partie à absorption acoustiques est chaque fois enchâssée.

12. Revêtement de dessous de caisse selon l'une des revendications 1 à 11, **caractérisé en ce que** la partie de support (2, 2', 2'', 2''', 2"") présente des éléments à découplage vibratoire (5), par lesquels la partie de support peut être fixée au dessous de caisse de l'automobile.

13. Revêtement de dessous de caisse selon l'une des revendications 1 à 12, **caractérisé en ce que** la partie de support (2, 2', 2'', 2''', 2'''') est conçu de sorte qu'il forme à l'état monté, un espace vide essentiellement fermé (16) avec le dessous de caisse (12) de l'automobile.

14. Revêtement de dessous de caisse selon l'une des revendications à 13, **caractérisé en ce que** la partie de support (2, 2', 2", 2"', 2'''') est formée de sorte qu'à l'état monté du revêtement de dessous de caisse (1, 1', 1", 1''', 1''''), sa couche microperforée, protégeant de la chaleur (14) et/ou sa partie à absorption acoustique (3), dont la face supérieure est libre, sont chaque fois à une certaine distance du dessous de caisse (12) de l'automobile.

15. Revêtement de dessous de caisse selon l'une des revendications 1 à 14, **caractérisé en ce que** sur la partie de support (2"'), au moins une ouverture (17) est formée, qui sert de courant refroidissant d'un segment du tuyau d'échappement (13) ou d'un autre dispositif produisant de la chaleur du véhicule.

16. Revêtement de dessous de caisse selon l'une des revendications 1 à 15, **caractérisé en ce que** sur la partie de support (2'''), au moins un canal d'air (18) est formé.

17. Revêtement de dessous de caisse selon l'une des revendications 1 à 16, **caractérisé en ce que** la partie à absorption acoustique (3) présente des propriétés hydrophobes et/ou oléophobes.

18. Revêtement de dessous de caisse selon l'une des revendications 1 à 17, **caractérisé en ce que** la couche microperforée, protégeant de la chaleur (14) est montée, coulée ou pulvérisée latéralement sur la partie de support (2,2',2",2"',2'"').
